# EUROPÄISCHE PATENTSCHRIFT

(11) **EP 1 254 497 B1**
(45) Veröffentlichungstag und Bekanntmachung des Hinweises auf die Patenterteilung: **27.07.2005**
(21) Anmeldenummer: 01905755.3
(22) Anmeldetag: 09.02.2001
(51) Int. Cl.: H02G 15/06

(54) **KABELENDVERSCHLUSS**
CABLE SEALING END
BOITE D'EXTREMITE DE CABLE

(30) Priorität: 09.02.2000 DE 10005703
(43) Veröffentlichungstag der Anmeldung: 06.11.2002
(73) Patentinhaber: nkt cables group GmbH, 51063 Köln (DE); Tyco Electronics Raychem GmbH, 85521 Ottobrunnn (DE)
(72) Erfinder: AMERPOHL, Uwe, 51467 Bergisch Gladbach (DE); BELZ, Wolfgang, 50829 Köln (DE); HAUPT, Gerhard, 50670 Köln (DE); SCHINDLER, Bernhard, 53844 Troisdorf (DE); BÖTTCHER, Bodo, 85521 Ottobrunn (DE)
(86) Internationale Anmeldenummer: PCT/EP2001/001425
(87) Internationale Veröffentlichungsnummer: WO 2001/059901

(56) Entgegenhaltungen:
- EP-A- 0 683 555
- FR-A- 2 547 451

## Beschreibung

Die Erfindung betrifft einen Kabelendverschluß, vorzugsweise einen Freiluftendverschluß für Hochspannung nach dem Oberbegriff des Hauptanspruchs.

Endverschlüsse sind in verschiedenen Ausführungen bekannt. Ältere Ausführungsformen sind mit Porzellanisolatoren und einer Öl- oder anderen chemischen Füllung ausgestaltet. Solche Endverschlüsse haben den Nachteil, dass sie mechanisch nicht sehr robust sind, und heutigen Umweltschutzbedingungen bezüglich eines möglichen Substanzaustritts nicht mehr genügen. Ein Endverschluß ohne Ölfüllung ist in der EP 667 665 B1 dargestellt. Besonderes Merkmal dieses Endverschlusses ist ein starres leitendes Element, welches für die Aufnahme der Querkräfte gestaltet ist. Die Kraftableitung erfolgt von der Freileiteranbindung über das starre leitende Element, über einen Grundkörper mit Feldsteuer- und Isoliereinrichtung auf den Lageraufbau. Auf der Oberfläche des Endverschlusses - insbesondere im Bereich des starren leitenden Elements - ist keine feldsteuernde Beschichtung vorhanden.

Es ist ein weiterer Kabelendverschluß mit selbsttragender Struktur bekannt, jedoch ohne Füllung mit gasförmigem oder flüssigem Isoliermedium (EP 0683555 A1). Die mechanische Festigkeit liefert ein steifes Metallrohr oder ein steifes mit leitender Beschichtung versehnes Rohr, welches über die gesamte Länge des Endverschlusses zwischen Befestigungsplattform und Freileiterklemme eingebracht ist. Beim Austausch eines Kabels muß die gesamte Struktur demontiert werden, insbesondere die Befestigung des Freileiters muß gelöst werden. Letzteres ist von besonderem Nachteil, weil Montagearbeiten sowohl am unteren als auch am oberen Ende des Endverschlusses vorzunehmen sind.

In Bezug auf die angesprochene leitende Beschichtung des tragenden Rohres, ist erwähnenswert, dass leitfähige Beschichtungen dazu dienen, eine Vergleichmäßigung des elektrischen Feldverlaufs zu erreichen. Für diesen Zweck ist bekannt, solche Schichten aus dünnem leitfähigen Material oder aus Schichten aus halbleitenden Kunststoffen auszubilden. Eine Sonderform einer leitenden Beschichtung findet sich in der FR 2 547 451 A1, wo die Leitfähigkeit unlinear von der Spannung abhängt.

Es ist Aufgabe der Erfindung, einen Kabelendverschluß, vorzugsweise einen Hochspannungs-Freiluftendverschluß vorzuschlagen, der kostengünstig herstellbar, mechanisch stabil und elektrisch zuverlässig gesteuert ist.

Die Aufgabe wird durch die Merkmale des Hauptanspruchs gelöst. Weiterführende Ausführungsformen finden sich in den Unteransprüchen.

Der Endverschluß ist einseitig auf einer Fußarmatur, vorzugsweise zur Befestigung auf einer Traverse aufgeständert. An der Fußarmatur sind Mittel zur Befestigung des Kabels ausgebildet mit einer elektrischen Durchführung im Innern des Endverschlusses. An einer Kopfarmatur befinden sich Mittel für die Befestigung eines elektrischen Leiters mit der Durchführung; Mittel zum elektrischen Verbinden der Kabelabschirmung mit Erdpotential und Mittel zur Feldsteuerung und Isolierung an den inhomogenen Potentialübergängen am Kabelende sind vorhanden.

Der Isolierkörper trägt in der Regel auf seiner Oberfläche ein elastomeres Material (vorzugsweise aus Silikonkautschuk) mit gerippter Oberfläche (Schirmteller). Die Länge und insbesondere der Durchmesser des Isolierkörpers ist so zu wählen, dass die Ansprüche auf ausreichende Isolation und Vermeidung von atmosphärischen Überschlägen bei voller Betriebsspannung erreicht werden. Diese Anforderung läßt sich dadurch erfüllen, wenn die Oberfläche des Isolierkörpers mit einem spannungsabhängigen Steuerbelag bedeckt wird. Der Durchmesser des Isolierkörpers läßt sich dann auch besonders klein halten. Der Steuerbelag wird auf der Basis von Mikrovaristoren, vorzugsweise ZnO-Mikrovaristoren, gebildet (WO 9726693 A1). Es handelt sich bei der bevorzugten Ausführungsform um ZnO-Keramik-Partikel, die zu einem Anteil von 60 bis 75 Gewicht-Prozent in eine Polymermatrix eingebettet sind. Die ZnO-Partikel sind mit Mischoxiden in der Größenordnung von 10 % auf der Basis der Oxide von Bi, Cr, Sb, Co, Mn und weiteren möglichen Elementen zu geringeren Anteilen dotiert. Die Polymermasse kann Silikonkautschuk oder Polyethylen sein, je nach Basismaterial das Trägerkörpers. Im vorliegenden Fall wird die den Steuerbelag bildende Schicht im Innern der mit Schirmtellern ausgebildeten Umhüllung des Isolierkörpers ausgebildet. Mit dieser erfindungsgemäßen Schicht wird erreicht, dass der Potentialverlauf derart verändet wird, daß die Feldlinien stärker zum oberen Ende des Endverschlusses gedrängt werden, so daß durch die geänderte elektrische Feldverteilung Spannungsspitzen oder Überspannungen am Ort der Kabelleiterverbindung vermieden werden. Die Wirkung der feldstärkeabhängigen Steuerschicht wird ausführlich im Aufsatz in Elektrizitätswirtschaft, Jg. 99 (2000) S. 68-73 beschrieben.

Der Isolierkörper wird an der Fußarmatur befestigt. Diese Art der Befestigung entspricht dem Stand der Technik (EP 667 665 B1). Die üblichen Mittel zum elektrischen Verbinden der Kabelabschirmung mit Erdpotential und Mittel zur Feldsteuerung (Feldsteuerkörper) und Isolierung an den inhomogenen Potentialübergängen am Kabelende werden eingesetzt. Wesentlich ist, dass bei der Befestigung an der Fußarmatur vorhandene Hohlräume zwischen Kabelende und den Feldsteuer- und Isolierelementen durch mechanische Verspannung mit der Fußarmatur geschlossen werden.

Die als Rohr oder als Bolzen ausgebildete elektrische Durchführung ist über Kontaktelemente mit dem Kabelleiter verbunden und die elektrische Durchführung, der Isolierkörper und die Kopfarmatur bilden zur Montage eine Einheit. Die Teile elektrische Durchführung mit Kontaktelementen, Isolierkörper und Kopfarmatur werden einzeln hergestellt. Die Kopfarmatur besteht im wesentlichen aus einem leitenden Abschlußteller und einem Leiteranschlußstutzen, in dem ein Gewinde zur Befestigung einer Tragöse eingebracht sein kann. Die elektrische Durchführung wird vorzugsweise in einem Schweißgang (oder durch eine andere feste mechanische Verbindung) im Innern des Abschlußtellers befestigt. Der aus Isoliermaterial bestehende Isolierkörper wird in die Kopfarmatur geklebt. Die so hergestellte Einheit wird an einer Tragöse mit einem Kran in die Montageposition gehoben und von oben über das vorbereitete Unterteil des Endverschlusses abgesenkt. Die Abmessungen der Teile im unteren Bereich der eine Einheit bildenden Anordnung werden so gestaltet, dass sie selbstzentrierend beim Zusammenfügen in den Grundaufbau auf der Fußarmatur hineingleiten.

Vorzugsweise ist die Kontaktaufnahme am Kabelleiter mit Schrauben befestigt. Der Kontakt in Form einer Steckverbindung zur elektrischen Durchführung wird über Kontaktlamellen vermittelt. Diese Steckverbindung ist nicht darauf angelegt, die Kräfte auf den Endverschluß aufzunehmen. In der vorliegenden Anordnung wird daher der Isolierkörper so aufgebaut und dimensioniert, dass er alle mechanischen Kräfte aufnehmen kann, der Steckverschluß ist dann von mechanischen Beanspruchungen ausgenommen. Als eine typische Größe der Querkraft wird mit 5 kN gerechnet, so dass die mechanische Auslegung an dieser Kenngröße zu bemessen ist.

Der Isolierkörper wird aus Gießharz oder einem anderen geeigneten Material hergestellt. Er kann stofflich verstärkt sein, beispielsweise mit Glasfasern. Von der Unterkante bis zur Höhe der Kontaktelemente ist der Isolierkörper stofflich voll ausgefüllt. Vorzugsweise ist im Innern des Isolierkörpers ein Hohlraum ausgebildet. Der Querschnitt des Hohlraums (die Raumfüllung) kann linear oder in einer Kurve in Trichterform zur Kopfarmatur hin vermindert sein. Durch die Ausbildung des Hohlraums kann das Gewicht gering gehalten werden, dennoch darf die Wandstärke nur so weit reduziert werden, dass die Biegekräfte aufgenommen werden können. In einer bevorzugten Ausführung ist die Innenfläche des Hohlraums mit einer leitfähigen Beschichtung belegt.

Die wesentlichen Verfahrensschritte bei der Montage sind folgende:
- Vorbereitung des Kabelendes, Absetzen und Freilegen des Kabelleiters
- Anbringen der Kontaktaufnahme am Kabelleiter
- Befestigung des Grundaufbaus an der Fußarmatur
- mittels Kran Anheben der Montage-Einheit bestehend aus isolierkörper, Kopfarmatur und elektrischer Durchführung
- Absenken der Montage-Einheit auf den an der Fußarmatur befestigten Grundaufbau
- die Teile finden sich selbstzentrierend
- Befestigung und Verspannung der Montage-Einheit an der Fußarmatur
- Befestigung des Freileiters über eine Stromklemme an der Kopfarmatur.

Ausführungsformen des Freiluftendverschlusses sind in den Figuren dargestellt. Sie zeigen in Einzelnen:
Fig. 1 eine erste Ausführungsform mit konstantem Außendurchmesser,
Fig. 2 eine andere Ausführungsform mit gestuftem Außendurchmesser,
Fig. 3 eine Ausführungsform mit verschiedenen Außenkonturen in der rechten und in der linken Figurenhälfte und
Fig. 4 zwei Flansch-Ausführungen.

Der erfindungsgemäße Endverschluß - beispielsweise für eine Nennspannung von 145 kV und mit einem Leiterquerschnitt von 1200 mm² - besteht aus einem Isolierkörper 50, vorzugsweise aus Gießharz, der im Inneren einen Hohlraum 56 aufweist. Im unteren Bereich ist erkennbar, dass am Ende der Kabelader (Leiter 12 und Leiterisolierung 15) die Anordnung der Feldsteuer-(36) und Isolierelemente 51 nach dem Fachmann bekannten Aufbau ausgeführt ist.

Ein Hochspannungskabel 10 ist in den unteren Bereich des Freiluftendverschlusses 8 eingeführt. Die Schirmdrähte 11 des Kabels 10 stehen in elektrischem Kontakt mit dem Flansch 20' des Fußteils 20, das über Isolatoren 21 auf einer Traverse eines Mastes aufgeständert ist.

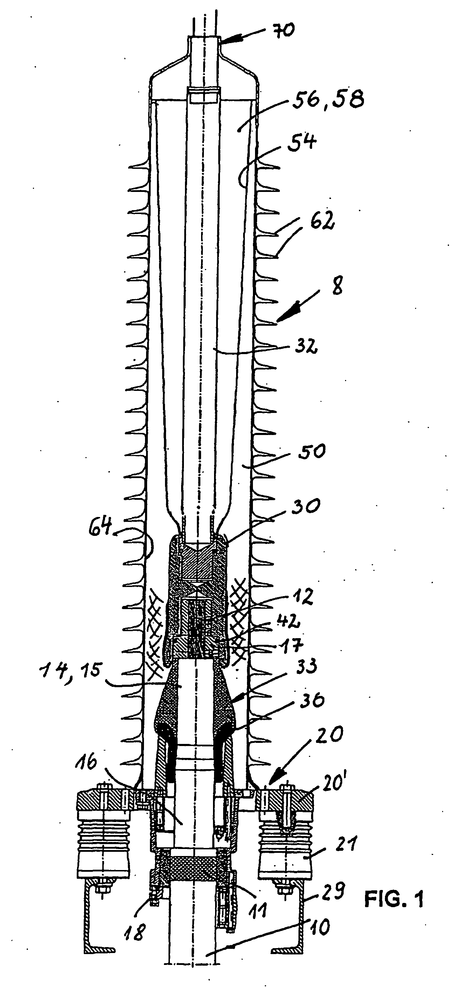

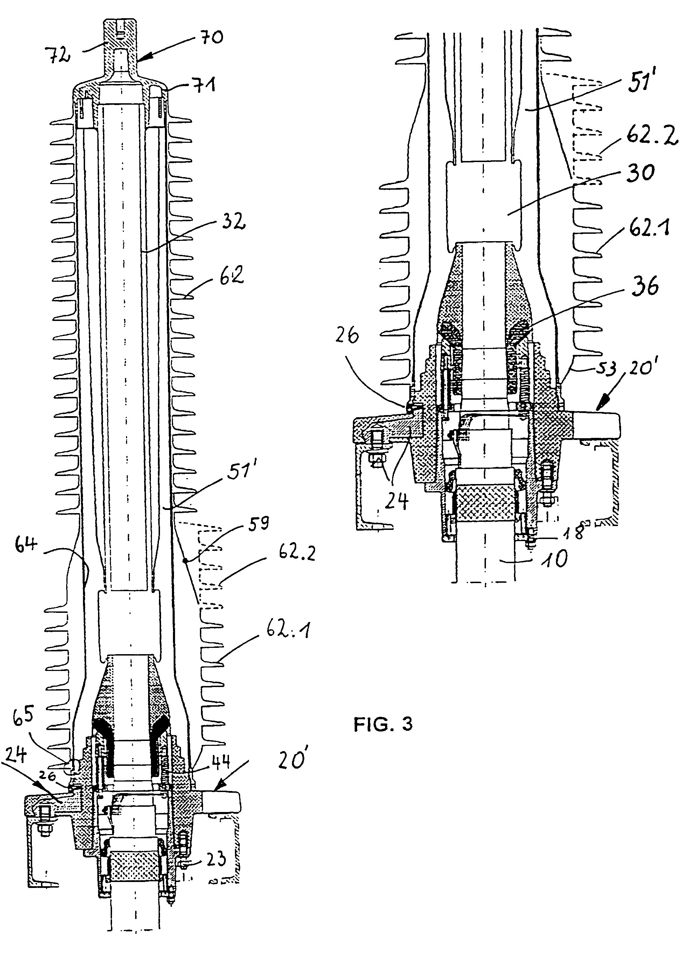

Wie in Fig. 1 gezeigt, ist der Durchmesser des Isolierkörpers 50 über seine gesamte Länge, aber auch insbesondere im unteren Bereich (siehe auch Bezugszeichen 53 in Fig. 3) unter Verwendung des spannungsabhängigen Steuerbelags 64 gering gehalten. Der Steuerbelag verläuft über die gesamte Länge des Isolierkörpers vom Erd- zum Hochspannungspotential. Die Schichtdicke kann zur Beeinflussung einer optimalen Steuerwirkung unterschiedlich dick aufgebracht sein. Die Außenfeldstärke in allen Betriebszuständen liegt dennoch unterhalb kritischer Werte.

Wie erwähnt kann die Schicht aus ZnO-Mikrovaristoren in eine Silikoneinbettung, bzw. in eine zum Isolierkörpermaterial passende Substanz (beispielsweise Polyethylen) eingearbeitet sein. Der Steuerbelag liegt im Inneren auf dem Isolierkörper an, auf dem Steuerbealg liegen die Schirmteller.

Der Isolierkörper 50 kann aus zwei, mit einander verklebten Teilen (51',51") mit unterschiedlichen Werkstoffqualitäten bestehen, denn der untere Teil 51' (Befestigung an der Fußarmatur bis auf Höhe der Kontaktelemente am Kabelleiter) ist - ohne Bedeckung mit Schirmtellern - der Umgebung ausgesetzt und muss für Freiluftanwendung geeignet sein. Der obere Teil 51 kann aus einem einfachen Werkstoff bestehen, da dieser Bereich in jedem Fall mit Schirmtellern 62 überzogen wird. Für eine Ausführungsform mit Schirmtellern 62.1 bis auf die Fußarmatur hinab besteht ebenfalls eine äußere Schutzbedeckung, so dass auch für diesen Bereich eine einfache Werkstoffqualität des Isolierkörpers eingesetzt werden kannn.

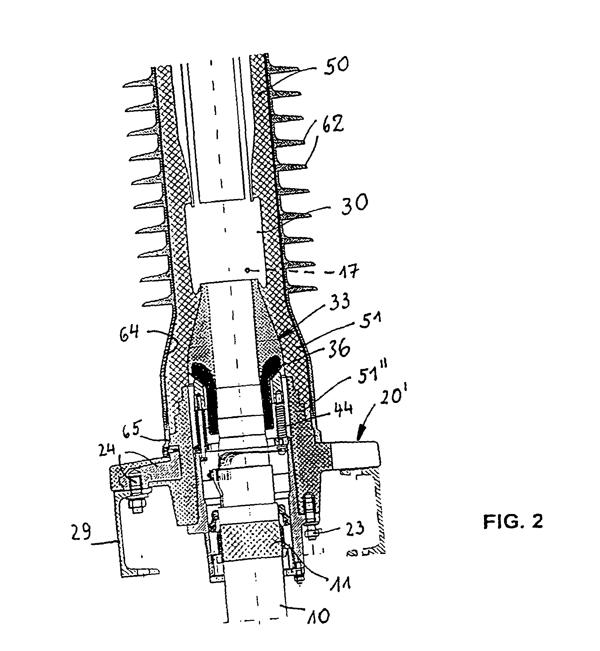

Die Außen-Kontur 59 des Isolierkörpers ist vorzugsweise zylindrisch auf der gesamten Länge. Je nach Gestaltung und Qualität der äußeren feldsteuernde Beschichtung 64 kann der Isolierkörper mit unterschiedlichen Durchmessern (unten größer und oben abnehmend und dazwischen ein konischer Übergang) gestaltet sein (siehe Fig. 2 und 3). Die Außenfläche des Freiluftendverschlusses 8 ist mit Schirmen 62 aus RTV- oder aus LSR-Silikonkautschuk bedeckt. Die innere Fläche 54 des Hohlraums 56 kann leitend ausgebildet sein. Sie kann erzeugt sein durch Leitlack, leitfähige Plasmabeschichtung, Metall-Folie (Blech), Metallisierung oder in Harz eingebettetes Metallgewebe. Die Fläche 54 liegt auf Hochspannungspotential. Der Vorteil dieser Ausbildung liegt darin, dass auch im Falle von Kondenswasserbildung im Hohlraum die elektrische Sicherheit gewährleistet bleibt, da die elektrischen Feldverhältnisse bei dem vorliegenden Hochspannungspotential einheitlich ist.

Die im Gießharzkörper 50 eingebettete Kontaktaufnahme umfaßt den Endkontakt 30 am unteren Ende des stromtragfähigen Rohrs 32. Das Rohr ist bis zur Kopfarmatur 70 geführt und dort befestigt. Im oberen Bereich des Endverschlusses ist ein mechanisch und elektrisch dichter Abschlußdeckel 71 aufgebracht.

Im Übergang vom vollvolumig ausgebildeten Grundkörper im unteren Bereich 53 zum Hohlraum ist die Verbindung zwischen Kabelleiter 12 und elektrischer Durchführung 32 angeordnet. Der Verbinder 30 klemmt im unteren Teil den freigelegten Kabelleiter. Der Stromfluss vom Kabelleiter 14 erfolgt über die Kontaktaufnahme 17 auf das Rohr 32. Vorzugsweise werden hierzu verschiebbare Kontakt- oder Klemmelemente zwischen Kabelleiter und elektrischer Durchführung vorgesehen. Der Übergang zwischen Verbinder 30 und Kontaktlamellen 42 kann mittels O-Ring gedichtet sein.

Der Feldsteuerkörper 33 besteht aus Silikonkautschuk und liegt mit seinem Steuerelement 36 auf dem Übergangsbereich von Leiterisolierung 14 und Ende der Leitschicht 15 auf. Der Vorteil der Erfindung liegt in der Ausbildung eines Isolierkörpers 50 mit zylindrischem Außenprofil 59. Der Isolierkörper hat im oberen Bereich auf seiner Länge einen konstanten Außendurchmesser. Im unteren Bereich (51) nimmt er den Feldsteuerkörper 33 auf und ist auf dem Fußteil 20 (Flansch) aufgeschraubt. Im oberen Bereich des Isolierkörpers ist in seinem Inneren ein Hohlraum 56 ausgebildet, dessen innere Oberfläche 54 elektrisch leitend ausgebildet ist. Zum Hohlraum ist Luftzutritt möglich.

Der Isolierkörper 50 ist im Fußteil mit einer Grundplatte oder einem Flansch 20 auf einem Traggestell 29 (beispielsweise eine Traverse über Isolierstützer 21) verschraubt. Alternativ kann der untere Bereich des Isolierkörpers auch als Gußkörper ausgeformt sein, der sich passend in den Flansch einfügen läßt.

In Fig. 3 rechte Figurenhälfte findet sich eine Ausführungsform des Isolierkörpers mit balliger Verdickung im unteren Bereich 53. Der zur Masseverbindung eingesetzte Metallring 26 kann bei dieser Ausbildung mit unverändertem Durchmesser eingesetzt beleiben. Im balligen Bereich 53 können Schirmteller 62.1 (62.2) vorhanden sein.

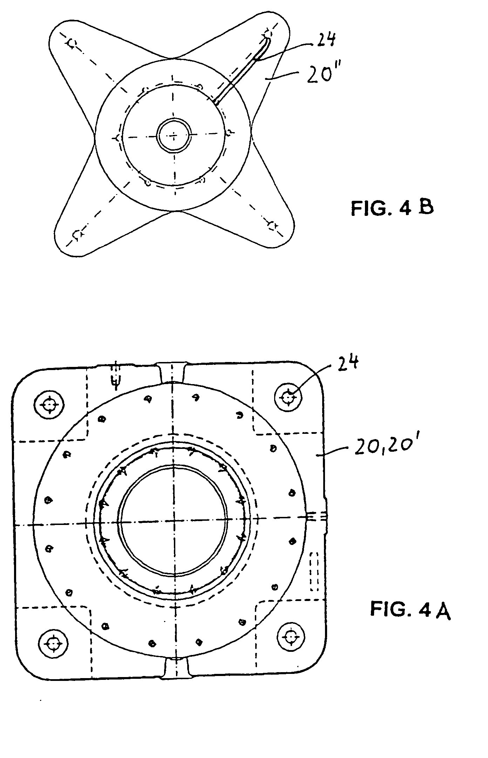

Die beiden Fig. 4A und 4B zeigen verschiedene Formen eines Flansches. Die Befestigung des Isolierkörpers auf dem Flasch erfolgt mit mehreren Schraubverbindungen 23 (Fig. 2 und Fig. 3). Durch das Anziehen der Schrauben verspannt sich die erwähnte Montageeinheit über die Federelemente 44 (siehe Fig. 3), so dass im Bereich des Feldsteuerkörpers vorhandene Hohlräume vollständig verschlossen werden. Mit Bezugszeichen 24 (Fig. 3) ist eine leitende Verbindung von der Oberfläche des Isolierkörpers zur Masseverbindung an der Traverse 29 angedeutet. Am Fuß des Isolierkörpers ist ein Metallring 26 (siehe Fig. 3) angebracht. Über eine Schraube wird der Metallring 26 mit der Masseverbindung 24 in Kontakt gebracht.

### Bezugszeichen

- 8: Endverschluss
- 10: Hochspannungskabel
- 11: Abschirmdrähte des Kabels
- 12: Kabelleiter
- 14: Leiterisolierung
- 15: Leitschicht auf der Kabelisolierung
- 16: Kabelader
- 17: Kontaktaufnahme (Klemmelement an Kabelleiter)
- 18: Kabelbefestigung an Fußarmatur
- 20, 20', 20": Fußarmatur (Flansch)
- 21: Isolator
- 23: Anschraubung des Isolierkörpers
- 24: Masseverbindung
- 26: Metallring (Kontakt zwischen äußerer Leitschicht und Massepotential)
- 29: Traverse
- 30: Verbinder (Steckverbinder)
- 32: leitender Bolzen oder Rohr
- 33: Feldsteuerkörper
- 34: Elektrode
- 36: Feldsteuertrichter
- 42: Kontaktlamellen
- 44: Federelemente
- 50: Isolierkörper
- 51',: 51" Oberteil/Unterteil
- 53: unterer Bereich
- 54: innere Oberfläche
- 56: Hohlraum
- 58: leitfähige Beschichtung
- 59: Aussenkontur
- 62: Schirmteller
- 62.1: Schirme im unteren Bereich (Fig. 3)
- 62.2: Schirme im Mittelteil (Fig. 3)
- 64: Leitschicht - außen
- 65: Anbindung Leitschicht an Masse
- 70: Kopfarmatur
- 71: Abschlussdeckel
- 72: Leiterbefestigung

## Patentansprüche

1. Kabelendverschluß (**8**), insbesondere Freiluftendverschluß für ein elektrisches Kabel (**10**) mit einem Kabelleiter (**12**), einer Kabelisolation (**14**), einer Leitschicht (**15**) und einer Kabelabschirmung (**11**), wobei der Endverschluß (**8**) einseitig auf einer Fußarmatur (**20**) aufgeständert ist, mit Mitteln (**18**) an der Fußarmatur (**20**) zur Befestigung des Kabels (**10**),
mit einer elektrischen Durchführung (**32**) im Innern des Endverschlusses (**8**),
mit einer Kopfarmatur (**70**) für die Befestigung eines elektrischen Leiters mit der Durchführung (**32**),
mit Mitteln (**30**) zum elektrischen Verbinden der Kabelabschirmung (**11**) mit Erdpotential,
mit einer Feldsteuer- (**34,36**) und einer Feldisoliereinrichtung für die Potentialübergänge am Kabelende,
mit einem Isolierkörper (**50**) und mit Mitteln (**23**) zur Befestigung des Isolierkörpers (**50**) an der Fußarmatur (**20**), wobei die elektrische Durchführung (**32**) Ober Kontaktelemente (**17,30**) mit dem Kabelleiter (**12**) verbunden ist, **dadurch gekennzeichnet,**
**dass** die Kontaktelemente (**17,30**) als Klemmelemente ausgebildet sind,
**dass** der Isolierkörper (**50**) zwischen dem Bereich der Befestigung (**23**) an der Fußarmatur (**20**) bis auf Höhe der Kontaktelemente (**17**) stofflich ausgefüllt und
die Füllung zur Kopfarmatur (**70**) hin vermindert ist, wodurch ein innen liegender Hohlraum (**56**) gebildet ist und
der Isolierkörper (**50**) zur Aufnahme der mechanischen Beanspruchung auf den Endverschluß (**8**) ausgebildet ist und
**dass** die Oberfläche des Isolierkörpers (**50**) mit einer spannungsabhängigen feldsteuernden Schicht (**64**) belegt ist.

2. Kabelendverschluß nach Anspruch 1, **dadurch gekennzeichnet, dass** die feldsteuernde Schicht (**64**) auf der Basis von Mikrovaristoren gebildet ist.

3. Kabelendverschluß nach Anspruch 2, **dadurch gekennzeichnet, dass** als Mikrovaristoren ZnO-Mikrovaristoren verwendet werden.

4. Kabelendverschluß nach einem der vorhergehenden Ansprüche, **dadurch gekennzeichnet, dass** die feldsteuemden Schicht (**64**) über die gesamte Länge des Isolierkörpers (**50**) verläuft.

5. Kabelendverschluß nach einem der vorhergehenden Ansprüche, **dadurch gekennzeichnet, dass** die Innenfläche (**54**) des Hohlraums (**56**) eine leitfähige Beschichtung (**58**) trägt.

6. Kabelendverschluß nach einem der vorhergehenden Ansprüche, **dadurch gekennzeichnet, dass** der Isolierkörper (**50**) aus Gießharz hergestellt ist.

7. Kabelendverschluß nach einem der vorhergehenden Ansprüche, **dadurch gekennzeichnet, dass** die elektrische Durchführung (**32**) als Rohr ausgebildet ist.

8. Kabelendverschluß nach einem der vorhergehenden Ansprüche, **dadurch gekennzeichnet, dass** die Kontaktelemente (**17**) am Kabelleiter (**12**) Lamellen-Kontakte sind.

## Claims

1. Cable terminator (8), in particular outdoor terminator for an electrical cable (10) having a cable conductor (12), a cable insulation (14), a conductive layer (15) and a cable shield (11), the terminator (8) being mounted at one end on a base fitting (20), having means (18) on the base fitting (20) for fastening the cable (10),
having an electrical duct (32) in the interior of the terminator (8),
having a top fitting (70) for fastening an electrical conductor to the duct (32),
having means (30) for electrically connecting the cable shield (11) to earth potential,
having a field control device (34,36) and a field insulating device for the potential transitions at the cable end,
having an insulating body (50) and having means (23) for fastening the insulating body (50) to the base fitting (20), the electrical duct (32) being connected to the cable conductor (12) via contact elements (17,30), **characterised**
**in that** the contacts (17,30) are designed as clamping elements,
**in that** the insulating body (50) is filled up with material from the region of the fastening (23) to the base fitting (20) up to the level of the contacts (17) and
the filling is reduced towards the top fitting (70), such that an internal cavity (56) is formed, and
the insulating body (50) is designed to take up mechanical load on the terminator (8), and
**in that** the surface of the insulating body (50) is coated with a voltage-dependent field-controlling layer (64).

2. Cable terminator according to Claim 1, **characterised in that** the field-controlling layer (64) is formed from microvaristors.

3. Cable terminator according to Claim 2, **characterised in that** the microvaristors used are ZnO microvaristors.

4. Cable terminator according to one of the preceding claims, **characterised in that** the field-controlling layer (64) runs over the entire length of the insulating body (50).

5. Cable terminator according to one of the preceding claims, **characterised in that** the inner surface (54) of the cavity (56) bears a conductive coating (58).

6. Cable terminator according to one of the preceding claims, **characterised in that** the insulating body (50) is produced from cast resin.

7. Cable terminator according to one of the preceding claims, **characterised in that** the electrical duct (32) is designed as a tube.

8. Cable terminator according to one of the preceding claims, **characterised in that** the contact elements (17) on the cable conductor (12) are laminated contacts.

## Revendications

1. Extrémité de câble (8), en particulier extrémité extérieure pour un câble électrique (10), laquelle extrémité comporte :
un conducteur de câble (12),
une isolation de câble (14),
une couche conductrice (15) et un blindage de câble (11), l'extrémité (8) étant montée d'un côté sur une armature de pied (20),
des moyens (18) sur l'armature de pied (20) pour la fixation du câble (10),
un passage électrique (32) à l'intérieur de l'extrémité (8),
une armature de tête (20) pour la fixation d'un conducteur électrique au passage (32),
des moyens (30) pour la liaison électrique du blindage de câble (11) au potentiel de terre,
un dispositif de commande de champ (34, 36) et un dispositif d'isolation de champ pour les transitions de potentiel à l'extrémité du câble,
un corps isolant (50) et des moyens (23) pour la fixation du corps isolant (50) à l'armature de pied (20), le passage électrique (32) étant relié au conducteur de câble (12) par l'intermédiaire d'éléments de contact (17, 30),
**caractérisée en ce que** :
les éléments de contact (17, 30) sont conformés en éléments de serrage,
le corps isolant (50), entre la région de la fixation (23) à l'armature de pied (20) jusqu'à hauteur des éléments de contact (17), est rempli de matière, et
le remplissage jusqu'à l'armature de tête (70) est réduit de façon à ménager un espace intérieur (56), et
le corps isolant (50) est conformé pour absorber la sollicitation mécanique exercée sur l'extrémité (8), et
la surface du corps isolant (50) est dotée d'une couche de commande de champ (64) en fonction de la tension.

2. Extrémité de câble selon la revendication 1, **caractérisée en ce que** la couche de commande de champ (64) est formée en se fondant sur des micro-varistances.

3. Extrémité de câble selon la revendication 2, **caractérisée en ce que** l'on utilise comme micro-varistances des micro-varistances au ZnO.

4. Extrémité de câble selon l'une des revendications précédentes, **caractérisée en ce que** la couche de commande de champ (64) s'étend sur toute la longueur du corps isolant (50).

5. Extrémité de câble selon l'une des revendications précédentes, **caractérisée en ce que** la surface intérieure (54) de l'espace intérieur (56) supporte un revêtement conducteur (58).

6. Extrémité de câble selon l'une des revendications précédentes, **caractérisée en ce que** le corps isolant (50) est fabriqué à partir d'une résine moulée.

7. Extrémité de câble selon l'une des revendications précédentes, **caractérisée en ce que** le passage électrique (32) est conformé en tube.

8. Extrémité de câble selon l'une des revendications précédentes, **caractérisée en ce que** les éléments de contact (17) au niveau du conducteur de câble (12) sont des contacts à lamelles.
